Europäisches Patentamt

European Patent Office

Office européen des brevets

(11) Numéro de publication: **0 300 106 B1**

## FASCICULE DE BREVET EUROPEEN

(45) Date de publication de fascicule du brevet: **15.07.92**

(51) Int. Cl.5: **B65G 65/44**

(21) Numéro de dépôt: **87401700.7**

(22) Date de dépôt: **21.07.87**

(54) **Silo pour le stockage en vrac de céréale.**

(43) Date de publication de la demande:
**25.01.89 Bulletin 89/04**

(45) Mention de la délivrance du brevet:
**15.07.92 Bulletin 92/29**

(84) Etats contractants désignés:
**AT BE CH DE ES FR GB GR IT LI LU NL SE**

(56) Documents cités:
**DE-A- 2 052 978**    **DE-A- 3 039 362**
**DE-C- 890 772**      **FR-A- 2 593 216**
**GB-A- 964 758**      **GB-A- 1 458 527**

(73) Titulaire: **Poncet, Jean-Claude**
**Champagne S/Loue**
**F-39600 Arbois(FR)**

(72) Inventeur: **Poncet, Jean-Claude**
**Champagne S/Loue**
**F-39600 Arbois(FR)**

(74) Mandataire: **Armengaud Ainé, Alain et al**
**Cabinet ARMENGAUD AINE 3 Avenue Bugeaud**
**F-75116 Paris(FR)**

Rank Xerox (UK) Business Services

## Description

La présente invention est relative à un dispositif d'ensilage en vrac de céréales ou d'autres produits divisés ou pulvérulents, qui permet pour un même volume utile, des conditions d'utilisation très sensiblement améliorées vis-à-vis des réalisations actuellement connues dans la technique.

Les divers types de silos à céréales peuvent être classés selon leur mode de vidange, en silos à vidange gravitaire, silos à vidange partiellement gravitaire avec reprise mécanique du tas résiduel, et silos à reprise non automatisée.

Les silos à vidange gravitaire exigent des bâtiments verticaux de grande hauteur, dont le coût de construction est en général très élevé.

A contenance égale, les silos de moindre hauteur, occupant au sol une surface plus étendue, sont moins chers à la construction. Dans ce cas, la vidange n'étant pas intégralement gravitaire, il convient d'évacuer les talus résiduels, par air pulsé, ou par des moyens mécaniques du genre vis sans fin, convoyeur ou racleur, rotatifs ou autres. Tous ces systèmes actuellement utilisés présentent cependant des inconvénients majeurs.

Le coût d'exploitation des systèmes à air pulsé est élevé, en raison de leur forte consommation énergétique. Les pertes de charge dans ces systèmes limitent nécessairement leur rayon d'action, et par suite les dimensions du silo et sa capacité de stockage. Dans le cas de convoyeurs rotatifs, il est nécessaire de prévoir un balayage du fond du silo, ce qui en accroît sensiblement le coût d'exploitation. Ce système ne permet pas de cloisonner le volume de stockage, ce qui limite les possibilités de diversifier la nature des produits stockés. En outre, il accroît le taux de brisure des graines, affectant ainsi la qualité du stock.

La vidange par racleur est chère à l'exploitation, car elle nécessite la présence d'opérateurs, ainsi qu'un nettoyage du silo. Ce système, peu pratique, interfère souvent avec les tirants des parois, et les gaines de ventilation. D'autre part, tous les modes de vidange en usage comportent des machines tournantes et des organes mécaniques qui, outre que leur efficacité diminue avec le temps, requièrent des opérations d'entretien périodique.

Le brevet allemand DE-A-30 39 362 illustre une autre réalisation d'un silo de stockage où le fond de ce silo est constitué par une plaque métallique en plusieurs parties. Toutefois, on constate que ces parties de la plaque sont seulement susceptibles de subir l'une par rapport à l'autre un mouvement de déplacement relatif plan sur plan, et non pas à proprement parler une vibration avec une amplitude variable s'exerçant perpendiculairement au plan de chaque partie. En outre, la plaque ainsi constituée fait partie d'une structure formée d'un ensemble de poutres et d'entretoises, présentant nécessairement une grande inertie, cette structure devant supporter la totalité de la charge du silo. La plaque rigide est montée sur des galets et est soumise à un mouvement alternatif d'avant en arrière par des pistons à double effet, ce qui ne permet pas une vidange satisfaisante du silo. De plus, dans cette réalisation connue, le silo comporte plusieurs étages avec des plaques oscillantes dans leurs plans, qui déversent les grains d'un étage à l'autre, ce qui limite la rapidité avec laquelle le silo peut être évacué.

La présente invention concerne un silo de stockage de grains qui pallie les désavantages des solutions antérieures, en permettant notamment de choisir n'importe quelle forme pour le bâtiment de stockage et en particulier d'adopter celle qui présente le moindre prix en tenant compte à la fois du coût du terrain et de celui de la construction du silo, en éliminant la présence de pièces tournantes, et en ne générant ni poussière, ni brisure des grains.

Elle a pour but d'assurer une adaptation simple et immédiate des conditions de vidange du silo aux caractéristiques particulières de chaque type de grain qu'il contient, notamment en fonction du poids spécifique des grains, leur taux d'humidité, le coefficient de frottement entre les grains et le fond du silo, etc...

A cet effet, le silo considéré, comportant un bâtiment de stockage de grains en appui au sol sur un système de fondation comprenant une dalle de fond présentant une légère pente sur l'horizontale et sur laquelle repose une plaque métallique, et un canal communiquant avec la partie la plus basse de la dalle pour la vidange des grains contenus dans le bâtiment de stockage, se caractérise en ce que la plaque métallique reposant sur la dalle porte une pluralité de vibrateurs pour la mise en vibration de cette plaque à une fréquence et avec une amplitude déterminées, ces vibrateurs étant répartis sur la surface de la plaque selon un réseau prédéfini, et lui imprimant des déplacements dans une direction normale au plan de la plaque.

Avantageusement, la plaque métallique est constituée par la juxtaposition de tôles minces coplanaires, planes ou nervurées, disposées côte à côte, certaines au moins de ces tôles supportant un vibrateur. De préférence, les vibrateurs sont solidarisés de leur tôle respective par l'intermédiaire d'un élément d'assise, plaque ou profilé, soudé ou boulonné à la tôle, indifféremment au-dessus ou en-dessous de celle-ci. En variante, les vibrateurs sont solidarisés chacun à deux tôles adjacentes, par l'intermédiaire d'un profilé d'assise boulonné transversalement aux deux tôles, en-dessous de celles-ci.

Selon le cas, les vibrateurs peuvent être des vibrateurs électro-magnétiques, mécaniques, hydrauliques, électriques, électro-mécaniques à balourd, pneumatiques à choc, bille, rouleau, turbine ou piston.

Dans un mode de réalisation préféré de l'invention mais qui en soi n'est pas exclusif de cette dernière, le bâtiment de stockage, à base rectangulaire, présente un profil polygonal symétrique. Le volume intérieur est délimité en quatre compartiments égaux par quatre cloisons verticales, deux dans le plan longitudinal de symétrie du silo, deux dans le plan transversal de symétrie. La dalle de fond comporte deux parties adjacentes d'inclinaison opposée dont chacune est commune à deux compartiments voisins.

Selon une caractéristique particulière, le canal de vidange s'étend selon l'axe longitudinal de symétrie du bâtiment, en séparant les deux parties de la dalle de fond.

Avantageusement, les vibrateurs portés dans chaque partie de la dalle par les tôles minces, sont disposés selon des lignes équidistantes, parallèles au canal de vidange.

De préférence également, chaque ligne de vibrateurs peut être associée à un coffret de commande centralisée, relié à un interrupteur à membrane ou analogue. Par ailleurs, chaque vibrateur est avantageusement disposé à l'intérieur d'un carter reposant sur une tôle mince de la plaque métallique et présentant une forme pyramidale ou autre, adaptée à gêner le moins possible l'écoulement des grains sur la plaque.

Selon une autre caractéristique particulière de l'invention, le canal de vidange des grains comporte une auge, présentant des ouvertures latérales en regard de chacune des deux parties de la dalle, et des trappes coulissantes pour l'obturation temporaire de ces ouvertures.

Avantageusement, l'auge du canal de vidange contient un convoyeur à chaîne pour l'évacuation des grains provenant des deux parties de la dalle et recueillis à l'intérieur de l'auge.

Selon une autre caractéristique également, le bâtiment de stockage comporte à son extrémité supérieure une bande transporteuse alimentée par un élévateur à godets, et un chariot verseur permettant de charger l'un quelconque des compartiments.

Selon encore une autre caractéristique, des gaines de ventilation reposent sur la dalle de fond, entre les tôles composant la plaque métallique, perpendiculairement au canal central. Chaque gaine présente une section transversale triangulaire, circulaire ou autre, et dans ses côtés latéraux, des trous, fentes ou évents pour la sortie hors de cette gaine de l'air ventilé. Avantageusement, chacune des gaines de ventilation peut être mise en communication avec le canal central, lequel est relié à un ventilateur.

D'autres caractéristiques d'un silo de stockage pour céréales ou analogues, établi conformément à l'invention, apparaîtront encore à travers la description qui suit d'un exemple de réalisation, donné à titre indicatif et non limitatif, en référence aux dessins annexés sur lesquels:

- la figure 1 est une vue schématique et en perspective du silo considéré.
- la figure 2 est une vue partielle de dessus d'un compartiment délimité à l'intérieur du bâtiment de stockage de la figure 1.
- la figure 3 est une vue en coupe transversale partielle selon la ligne II-II de la figure 2.
- la figure 4 est une vue à plus grande échelle illustrant divers détails de la figure 3.
- la figure 5 est une vue en coupe et en perspective partielle de la galerie centrale.
- la figure 6 illustre un autre détail entrant dans la réalisation de la plaque métallique en fond de silo, vu en coupe selon la ligne I-I de la figure 2.

Dans l'exemple de réalisation représenté sur ces figures, le silo considéré comporte un bâtiment de stockage de grains ou de matériau ou produit analogues, généralement à parois en béton ou en construction métallique, désigné dans son ensemble par la référence 1. Ce bâtiment 1 est délimité par deux faces latérales 2a, deux faces longitudinales 2b, et deux pans de toiture 2c, et repose sur un système de fondation composé de longrines 3, permettant l'ancrage du bâtiment 1 par tous moyens conventionnels dans la technique d'ouvrages de ce genre.

Le volume délimité à l'intérieur du bâtiment 1 est de préférence subdivisé en quatre compartiments de même volume, au moyen de quatre cloisons respectivement 4, 5, 6 et 7, les cloisons 4 et 5 s'étendant dans le plan longitudinal de symétrie, et les cloisons 6 et 7 dans le plan transversal de symétrie. Dans ces compartiments pris deux à deux, le fond est réalisé en deux parties respectivement 8 et 9 dont chacune est commune à deux compartiments voisins et présente une légère inclinaison sur l'horizontale de telle sorte que les régions les plus basses des parties 8 et 9 se situent au voisinage et de part et d'autre d'une galerie ou canal central 10, dont le détail de la réalisation sera décrit plus loin.

Le bâtiment 1 comporte à sa partie supérieure un rehaussement 11, communiquant avec un élévateur à godets 12, et abritant un convoyeur à bande et un chariot verseur 13 de chargement du silo.

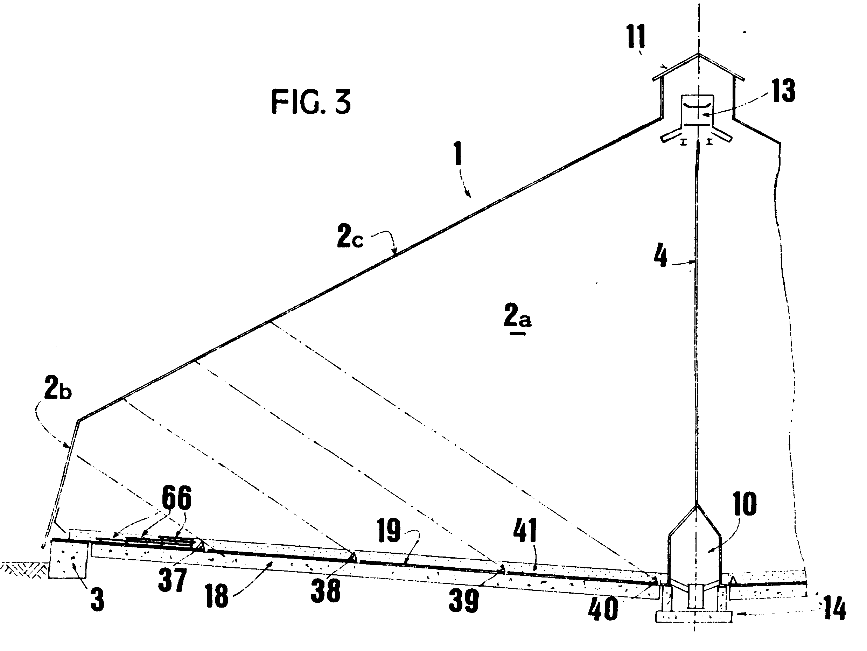

En se référant plus particulièrement aux figures 3 à 5, on voit que le fond du bâtiment 1 est constitué par une dalle en béton 18, s'étendant entre les longrines 3 de fondation des parois 2b, et le canal 14 de fondation du canal de vidange 10. Sur la dalle 18 respose, conformément à l'invention, une plaque métallique 19 maintenue sur cette dalle à son extrémité située le plus haut dans chacune des parties 8 et 9 par l'intermédiaire de ressorts 20 accrochés à des tenons 21 soudés à la plaque 19, et à un fer cornière 22 fixé à la structure de la paroi 2b. Un déflecteur 15 est avantageusement fixé contre la paroi 2b et incliné vers la plaque 19 afin d'éviter que les grains contenus dans le silo ne pénètrent dans le coin formé entre la dalle 18 et la paroi 2b et de là sous la plaque 19. La dalle 18 est délimitée latéralement de manière à ménager un espace réduit 23 entre son bord extérieur et la face intérieure de la longrine 3, cet espace 23 étant notamment réservé à la mise en place d'un joint prémoulé 24 entourant la périphérie de la dalle 18, l'espace 23 étant en outre rempli au-dessus du joint 24 au moyen d'un matériau approprié 25, présentant des propriétés d'étanchéité convenable, du genre mastic.

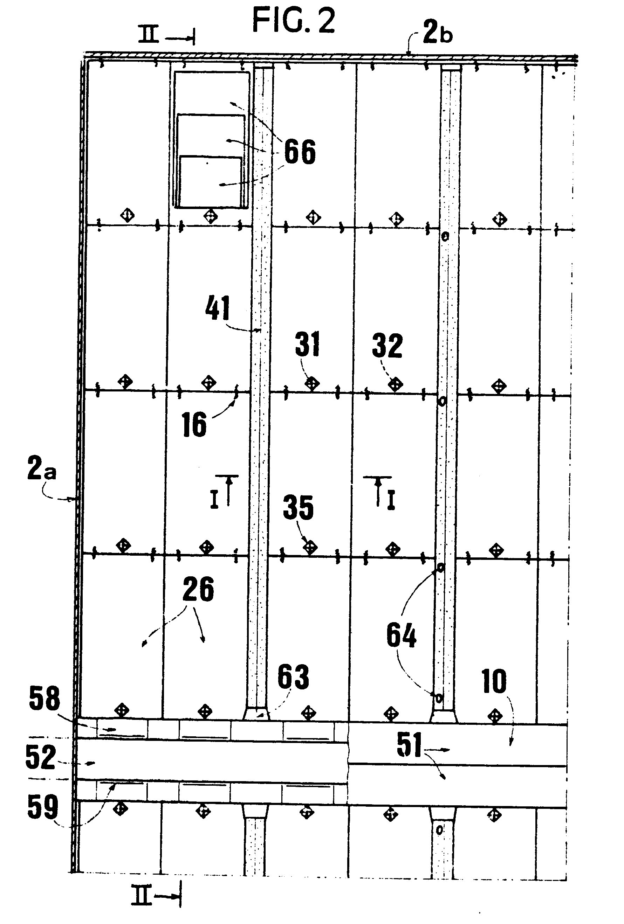

Conformément par ailleurs à une caractéristique particulière du silo considéré, la plaque métallique 19 dans chacune des parties 8 et 9, est réalisée au moyen d'une pluralité de tôles métalliques minces, telles que 26, disposées côte à côte, comme l'illustrent plus particulièrement les figures 2 et 6, ces tôles 26 étant aménagées deux à deux de manière à laisser libre entre elles un jeux latéral limité 27 sous lequel est montée une plaque de liaison 28, solidarisée des deux tôles contiguës 26 au moyen de boulons de fixation 29, ou de tout autre moyen analogue approprié.

Selon l'invention, on dispose sur certaines au moins des tôles précédentes et selon un réseau prédéterminé dont les caractéristiques seront définies plus loin, des organes 31, aptes à réaliser la mise en vibration de la plaque 19, chacun de ces organes comprenant un vibrateur 32 d'un type en lui-même connu du genre vibrateur électromagnétique, mécanique, hydraulique, électro-mécanique à balourd, pneumatique à chocs, bille, rouleau, turbine ou piston, ou tout autre type. Chaque vibrateur 32 est solidarisé par des boulons 30 à une plaque rigide de fixation 33 soudée à la tôle 26 correspondante. Chaque vibrateur est par ailleurs monté à l'intérieur d'un carter ou capot de protection 35 qui, dans l'exemple considéré, présente une forme pyramidale afin de n'offrir qu'une résistance limitée à l'écoulement des grains de la manière exposée plus loin. Chacun des capots 35 est immobilisé sur la tôle 26 par des vis 36.

Avantageusement, et comme représenté sur la figure 3, les vibrateurs 32 sont préférentiellement disposés sur les tôles 26 constituant la plaque métallique 19, selon des lignes s'étendant parallèlement à la direction de la galerie centrale 10.

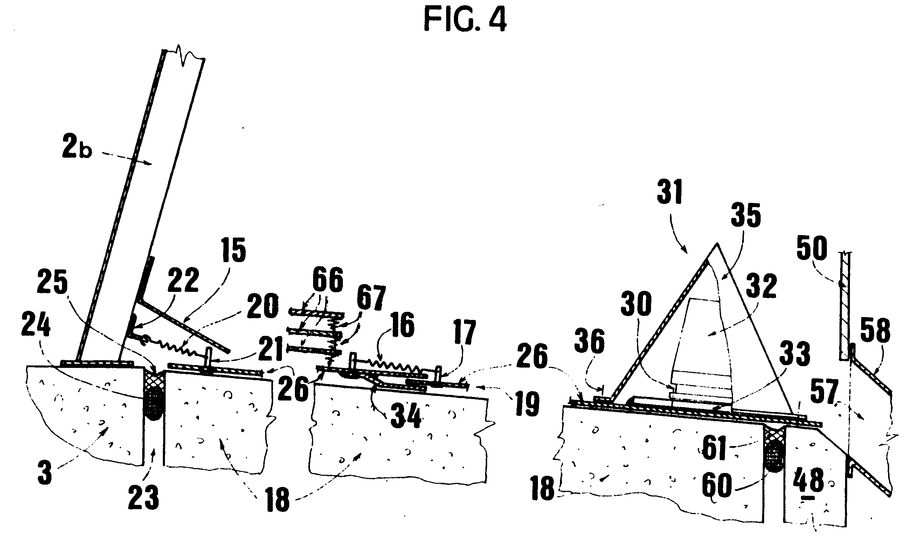

Par ailleurs, au voisinage des lignes de vibrateurs 32, dans le sens transversal parallèlement au canal 10, les tôles 26 sont aménagées de façon à se recouvrir comme illustré sur la figure 4, la tôle inférieure venant s'emboîter entre la tôle supérieure et une feuillure 34 soudée sous la tôle supérieure, la liaison entre les tôles étant assurée au moyen de ressorts 16 accrochés à leurs extrémités sur les têtes de tenons 17 soudés à ces tôles. Cette disposition permet de conserver aux tôles le maximum de degrés de liberté afin que l'énergie vibratoire dont elles sont le siège soit dissipée essentiellement par les déformations générées dans ces tôles et non pas par les liaisons de ces dernières. les ressorts 16 et 20 confèrent au montage ainsi réalisé la plus grande souplesse.

Les lignes de vibrateurs 32 désignées sous les références 37, 38, 39 et 40 sont disposées de préférence aux trois quarts, à la moitié, au quart et à la partie inférieure de la plaque 19, au plus près du canal central 10. Toutefois, il va de soi que, selon les dimensions du bâtiment 1 et selon la nature du produit à stocker, les vibrateurs pourraient être répartis d'une façon différente sur la surface de la plaque 19 afin de permettre la meilleure efficacité possible pour l'écoulement progressif des grains en direction du canal 10.

En outre, des gaines de ventilation 41 sont avantageusement fixées sur la dalle 18 par des ancrages conventionnels 42, et s'étendent perpendiculairement au canal central 10, entre deux rangées contiguës de tôles 26. Comme on le voit sur la figure 6, des bandes 43 de matériau souple du genre caoutchouc, fixées à la gaine de ventilation 41, viennent recouvrir des feuillures latérales 44 solidarisées des tôles 26 au moyen de rivets 45 ou de tout autre moyen approprié. Les gaines de ventilation 41 présentent sur leurs faces latérales une pluralité de perforations 46, permettant le passage d'air pulsé de l'intérieur des gaines 41 vers l'extérieur dans les compartiments correspondants. L'alimentation en air des gaines 41 sera explicité plus loin.

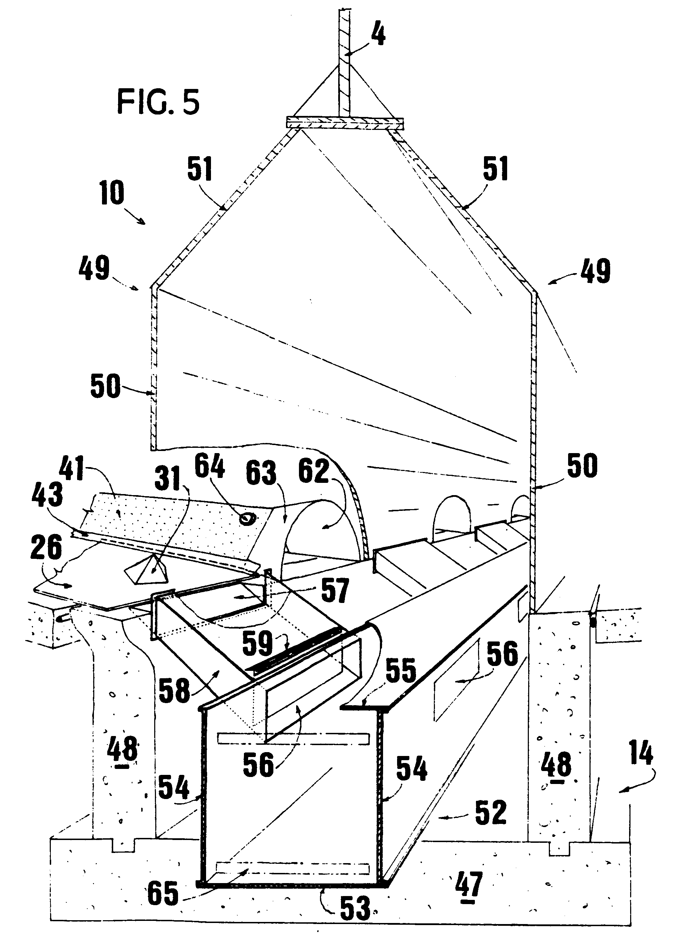

La figure 5 illustre avec plus de détails la réalisation du canal central 10, laquelle est composée d'un canal de fondation en béton 14 comportant une dalle horizontale 47 et deux murs latéraux 48, et de deux parois 49. Chaque paroi 49 est constituée d'un pan vertical 50 ancré sur le mur 48, et d'un pan incliné 51, les deux pans 51 étant assemblés à leur sommet afin de supporter les parois 4 et 5 de séparation longitudinale du bâtiment 1. Une auge métallique 52, constituée d'un fond 53, de deux côtés 54 et d'un couvercle 55, repose sur la dalle 47. Les parois latérales 54 de l'auge 52 comportent des ouvertures allongées 56. Des ouvertures semblables 57 sont ménagées à la base des pans verticaux 50 des parois 49, et des goulottes 58 relient entre elles les ouvertures 56 aux ouvertures 57. Les goulottes 58 permettent ainsi de faire communiquer chacun des compartiments délimités au-dessus des parties 8 et 9 avec l'intérieur de l'auge 52, laquelle abrite un convoyeur de reprise 65 pour l'évacuation des grains, non représenté. Chaque goulotte 58 est pourvue d'une vanne à glissières 59, pour permettre, ou non, le passage des grains par la goulotte 58. Un joint d'étanchéité 60, coiffé d'un remplissage en mastic 61, est interposé entre les murs 48 et la dalle 18. Entre les ouvertures rectangulaires 57, des ouvertures semi-circulaires 62 sont ménagées à la base des parts verticaux 50 des parois 49, et communiquent avec les gaines de ventilation 41 fixées sur la dalle 18, par l'intermédiaire d'éléments de transition 63. Chaque ouverture 62 est munie d'une porte, non représentée, qui permet de mettre en communication le volume intérieur du canal 10 avec la gaine de ventilation 41 associée.

Sur une gaine de ventilation 41 dans chacun des compartiments délimités à l'intérieur du bâtiment 1, sont prévus des interrupteurs à membrane 64, permettant la mise en route des vibrateurs 32, de préférence de manière centralisée, successivement et dans cet ordre selon les lignes 40, 39, 38 et 37 précédemment décrites.

Le fonctionnement du silo de stockage de céréales décrit dans l'exemple exposé ci-dessus est le suivant:

Les compartiments délimités à l'intérieur du bâtiment 1 entre ses parois extérieures 2a, 2b, 2c, et les cloisons internes 4 à 7 au-dessus des parties 8 et 9 de la dalle de fond 18 étant préalablement remplis, partiellement ou totalement, par l'intermédiaire du chariot verseur 13, on procède à la vidange simultanée ou séparée de chacun de ces compartiments en procédant à l'ouverture d'une ou de plusieurs vannes 59 ménagées dans les goulottes 58.

Du fait de la gravité, les grains contenus à l'intérieur de chacun des compartiments s'écoulent dans l'auge 52 où le convoyeur à chaîne 65 permet alors leur évacuation en continu.

Toutefois, lorsque le talus naturel d'éboulement de chacun des volumes de céréales à l'intérieur des compartiments devient tel que, du fait des frottements de ces grains entre eux et sur les parois, leur écoulement devient plus difficile ou même s'arrête, l'interrupteur à membrane situé le plus bas, sensible à la baisse de pression, met en marche conformément à l'invention, les vibrateurs 32 montés sur les tôles métalliques 26 des plaques 19, le long de la ligne 40. Il se produit une déstabilisation du pied du talus formé par les grains, et l'écoulement en couches successives de ce talus en direction de l'auge de vidange, puis son évacuation par le convoyeur à chaîne. Lorsqu'une baisse suffisante de pression est enregistrée par l'interrupteur à membrane situé immédiatement en amont du précédent relativement à la pente de la plaque 19, les vibrateurs 32 de la ligne 39 se mettent en route, poursuivant l'action de déstabilisation du pied du talus, et l'évacuation des grains. On réalise ainsi de proche en proche la vidange complète du talus résiduel. Les couches tributaires de chaque ligne de vibrateurs 32 sont délimitées schématiquement en traits mixtes sur la figure 3.

L'amplitude et la fréquence des vibrateurs 32 peuvent être réglées au moyen d'un organe de commande (non représenté), la fréquence pouvant varier entre 5 et 60 Hertz étant entendu que des fréquences différentes pourraient être choisies sans sortir du cadre de l'invention. La combinaison amplitude-fréquence la mieux adaptée est en effet à chaque fois déterminée en fonction de la nature des grains contenus dans le silo et en particulier du poids spécifique de ces grains, de leur taux d'humidité et de leur angle de frottement interne. D'autres paramètres peuvent également entrer en jeu, comme la forme des grains, leur grosseur et le contenu des grains en brisures, poussières ou impuretés.

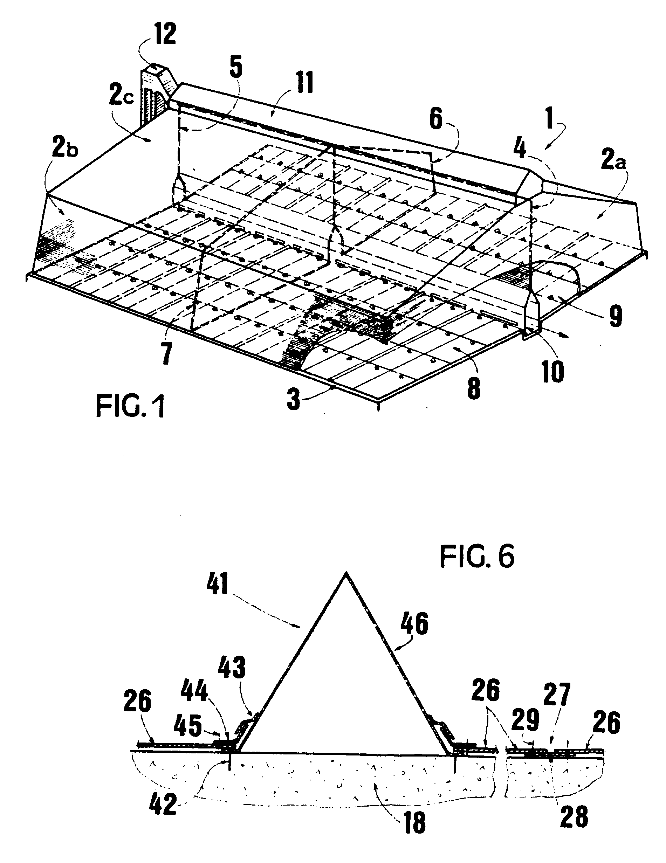

Dans le cas d'un bâtiment de stockage de forme polygonale du genre de celui plus spécialement illustré sur la figure 1, l'expérience indique qu'environ 57 % du volume total contenu à l'intérieur du silo peut s'écouler par gravité, au fur et à mesure de l'ouverture des vannes 59 des goulottes 58. La vidange du talus résiduel, représentant environ 43 % du contenu total, peut être effectuée comme précédemment décrit, ou en actionnant les vibrateurs séparément par rotations successives, programmées ou non, ou de toute autre façon.

La forme particulière des capots entourant les vibrateurs est avantageusement déterminée afin d'entraver le moins possible l'écoulement des grains. Toutefois, les vibrateurs 32 peuvent être installés en-dessous des tôles 26, dans des logements prévus à cet effet dans la dalle 18, sans sortir du cadre de l'invention.

La galerie 10 étant reliée à un ventilateur, il est possible de ventiler le grain se trouvant dans la zône d'influence d'une gaine de ventilation 41 en ouvrant la porte de l'ouverture 62 correspondante. Plusieurs gaines de ventilation 41 peuvent ainsi être mises en communication avec le volume intérieur du canal 10, lorsque ceci s'avère nécessaire pour la bonne conservation des grains. On peut éventuellement prévoir, pour accélérer l'évacuation des dernières quantités de grains, de mettre en oeuvre les gaines de ventilation de telle sorte que ces grains soient également poussés dans la direction de la pente des plaques métalliques vers l'auge de vidange.

Bien entendu, il va de soi que l'invention ne se limite pas au seul mode de réalisation plus spécialement décrit et représenté; elle en embrasse au contraire toutes les variantes. Notamment, il est clair que la forme polygonale du bâtiment de stockage n'est pas exclusive et que tout autre profil ou volume pourrait être envisagé, cylindrique à toit plat ou conique, en forme de dôme hémisphérique, parallélépipédique, etc...

De même, il doit être considéré que la pente de la dalle de fond sera chaque fois déterminée de manière à réduire le moins possible la capacité du silo, tout en permettant de satisfaire à un débit de vidange prédéterminé. En règle générale, la pente sera choisie entre 7 et 10 %.

Le matériau constituant la plaque métallique mise en vibration sera de l'acier ou tout autre métal ou alliage approprié pour présenter un faible coefficient de frottement avec les grains et une bonne résistance à l'abrasion par les céréales, les tôles juxtaposées formant cette plaque présentant une épaisseur généralement comprise entre 10 et 25 dizièmes de millimètre, de manière à réaliser un compromis acceptable entre le poids de la plaque et la rigidité nécessaire à la transmission des vibrations et la résistance mécanique de la plaque. Les tôles constituant la plaque pourront être planes ou nervurées, avec ou sans raidisseur. Les figures 2, 3 et 4 présentent un mode alternatif de constitution de la plaque métallique 19, indiqué à titre d'exemple dans la zône comprise entre la ligne 37 et la paroi 2b. Dans ce cas, la plaque 19 est composée de tôles 66 superposées à la tôle 26, et entretoisées par des ressorts coniques de compression 67. Lorsque le silo est chargé, les tôles 66 se trouvent en contact avec la tôle 26 sous l'effet de la pression. Au fur et à mesure de la vidange, la pression sur les tôles 66 diminue et les ressorts 67 se relâchent. La plaque 19 consiste alors en une tôle à étages sur laquelle le grain peut s'écouler en plusieurs couches, ce qui contribue à augmenter le débit de l'écoulement. Ce système de tôle à étages peut être généralisé à l'ensemble de la plaque 19. En outre, les tôles 26 et 66 peuvent comporter un revêtement de surface de type plastique, rapporté aux tôles en raison de son très faible coefficient de frottement et de sa résistance à l'abrasion.

On réalise ainsi un silo à vidange entièrement automatique, pouvant présenter un volume important pour une hauteur limitée, ne générant ni poussière ni brisure des grains, auto-nettoyant, dont la vidange peut être adaptée au contenu, et ne nécessitant qu'un entretien minimal.

**Revendications**

1. Silo de stockage en vrac de céréales, comportant un bâtiment (1) de stockage de grains en appui au sol sur un système de fondation comprenant une dalle de fond (18) présentant une légère pente sur l'horizontale et sur laquelle repose une plaque métallique (19), et un canal (14) communiquant avec la partie la plus basse de la dalle pour la vidange des grains contenus dans le bâtiment de stockage, caractérisé en ce que la plaque métallique (19) reposant sur la dalle porte une pluralité de vibrateurs (32) pour la mise en vibration de cette plaque à une fréquence et avec une amplitude déterminées, ces vibrateurs étant répartis sur la surface de la plaque selon un réseau prédéfini, et lui imprimant des déplacements dans une direction normale au plan de la plaque.

2. Silo de stockage selon la revendication 1, caractérisé en ce que la plaque métallique est constituée par la juxtaposition de tôles minces (26) coplanaires, planes ou nervurées, disposées côte à côte, certaines au moins de ces tôles supportant un vibrateur (32).

3. Silo de stockage selon la revendication 2, caractérisé en ce que des vibrateurs (32) sont solidarisés de leur tôle respective (26) par l'intermédiaire d'un élément d'assise (33), plaque ou profilé, soudé ou boulonné à la tôle, indifféremment au-dessus ou en-dessous de celle-ci.

4. Silo de stockage selon la revendication 2, caractérisé en ce que des vibrateurs (32) sont solidarisés chacun à deux tôles adjacentes (26), par l'intermédiaire d'un profilé d'assise (33) boulonné transversalement aux deux tôles, en-dessous de celles-ci.

5. Silo de stockage selon l'une des revendications 2 à 4, caractérisé en ce que les vibrateurs (32) sont des vibrateurs électro-magnétiques, mécaniques, hydrauliques, électriques, électro-mécaniques à balourd, pneumatiques à choc, bille, rouleau, turbine ou piston.

6. Silo de stockage selon l'une quelconque des revendications 2 à 5, caractérisé en ce que les vibrateurs (32) portés par les tôles minces (26) sont disposés selon des lignes équidistantes, parallèles au canal de vidange.

7. Silo de stockage selon la revendication 6, caractérisé en ce que chaque ligne de vibrateurs est mise en route par l'intermédiaire d'un interrupteur à membrane (64) ou analogue, relié à un organe de commande centralisée.

8. Silo de stockage selon l'une quelconque des revendications 1 à 7, caractérisé en ce que des gaines de ventilation (41) perpendiculaires à la direction du canal de vidange, sont fixées sur la dalle (18) entre deux tôles (26) et communiquent avec une galerie centrale de ventilation (10).

9. Silo de stockage selon l'une quelconque des revendications 1 à 8, caractérisé en ce que les tôles minces (26) portent d'autres tôles minces (66) superposées et entretoisées par des ressorts de compression (67), l'ensemble formant une plaque métallique (19) à plusieurs étages.

10. Silo de stockage selon la revendication 4, caractérisé en ce que l'élément de liaison (28) est un profilé d'étanchéité emboîté longitudinalement dans chacune des deux tôles adjacentes (26).

## Claims

1. Silo for the bulk storage of cereals, comprising a building (1) for the storage of grain resting on the ground on a foundation system comprising a base slab (18) having a slight inclination to the horizontal and on which a metal plate (19) rests, and a channel (14) communicating with the lowest portion of the slab for the emptying of the grain contained in the storage building, characterised in that the metal plate (19) resting on the slab carries a plurality of vibrators (32) for setting this plate into vibration with a predetermined frequency and amplitude, these vibrators being distributed over the surface of the plate in a predefined network and imprinting displacements on it in a direction normal to the plane of the plate.

2. Storage silo according to claim 1, characterised in that the metal plate is formed by the juxtaposition of coplanar, plane or ribbed thin metal sheets (26) arranged side by side, at least some of these metal sheets supporting a vibrator (32).

3. Storage silo according to claim 2, characterised in that vibrators (32) are connected to their respective metal sheet (26) by means of a plate-type or profiled bed element (33) which is welded or bolted to the metal sheet either above or below the metal sheet.

4. Storage silo according to claim 2, characterised in that vibrators (32) are each connected to two adjacent metal sheets (26) by means of a bed profile (33) bolted transversely to the two metal sheets, below the metal sheets.

5. Storage silo according to one of claims 2 to 4, characterised in that the vibrators (32) are electromagnetic, mechanical, hydraulic, electric, unbalanced electromechanical or impact, ball, roller, turbine or piston type pneumatic vibrators.

6. Storage silo according to any one of claims 2 to 5, characterised in that the vibrators (32) carried by the thin metal sheets (26) are arranged along equidistant lines parallel to the emptying channel.

7. Storage silo according to claim 6, characterised in that each line of vibrators is started up by means of a diaphragm-type switch (64) or the like connected to a centralised control unit.

8. Storage silo according to any one of claims 1 to 7, characterised in that ventilation sheaths (41) perpendicular to the direction of the emptying channel are fixed on the slab (18) between two metal sheets (26) and communicate with a central ventilation passage (10).

9. Storage silo according to any one of claims 1 to 8, characterised in that the thin metal sheets (26) carry other superimposed thin metal sheets (66) braced by compression springs (67), the assembly forming a multistage metal plate (19).

10. Storage silo according to claim 4, characterised in that the connecting element (28) is a sealing profile fitted longitudinally in each of the adjacent metal sheets (26).

## Patentansprüche

1. Silo zur Einlagerung von Getreide als Schüttgut mit einem Gebäude (1) zur Einlagerung von Körnern, das sich am Boden auf einem Fundamentsystem abstützt, das eine Bodenplatte (18), die eine geringe Neigung zur Horizontalen aufweist und auf der eine Metallplatte (19) ruht, und einen mit dem tiefsten Teil der Bodenplatte zur Auslagerung der im Lagergebäude enthaltenen Körner in Verbindung stehenden Kanal (14) umfaßt, dadurch gekennzeichnet, daß die auf der Bodenplatte ruhende Metallplatte (19) eine Mehrzahl von Vibratoren (32) trägt, um diese Platte mit einer bestimmten Frequenz und bestimmten Amplitude in Schwingung zu versetzen, wobei diese Vibratoren über die Fläche der Platte gemäß einem festgelegten Netz verteilt sind und ihr Verschiebungen in einer zur Ebene der Platte senkrechten Richtung aufzwingen.

**2.** Lagersilo nach Anspruch 1, dadurch gekennzeichnet, daß die Metallplatte aus Seite an Seite nebeneinander angeordneten ebenen oder gerippten koplanaren dünnen Blechen (26) besteht, von denen wenigstens einige einen Vibrator (32) tragen.

**3.** Lagersilo nach Anspruch 2, dadurch gekennzeichnet, daß Vibratoren (32) mit ihrem jeweiligen Blech (26) mittels eines als Platte oder Profil ausgebildeten Trägerelements fest verbunden sind, das gleichgültig ob oberhalb oder unterhalb des Bleches an diesem angeschweißt, angeschraubt oder angenietet ist.

**4.** Lagersilo nach Anspruch 2, dadurch gekennzeichnet, daß Vibratoren (32) jeder mit zwei benachbarten Blechen (26) mittels eines quer zu den zwei Blechen unterhalb derselben angeschraubten oder angenieteten Profilstahlträgers (33) fest verbunden sind.

**5.** Lagersilo nach einem der Ansprüche 2 bis 4, dadurch gekennzeichnet, daß die Vibratoren (32) elektromagnetische, mechanische, hydraulische, elektrische, elektro-mechanische mit Unwucht, pneumatische mit Stoß, Kugel, Walze, Turbine oder Kolben arbeitende sind.

**6.** Lagersilo nach einem der Ansprüche 2 bis 5, dadurch gekennzeichnet, daß die von den dünnen Blechen (26) getragenen Vibratoren (32) in Reihen längs Linien angeordnet sind, die in gleichen Abständen voneinander und parallel zum Entleerungskanal verlaufen.

**7.** Lagersilo nach Anspruch 6, dadurch gekennzeichnet, daß jede Reihe von Vibratoren mittels eines Membranschalters (64) oder dergleichen, der mit einem Zentralsteuerungselement verbunden ist, eingeschaltet wird.

**8.** Lagersilo nach einem der Ansprüche 1 bis 7, dadurch gekennzeichnet, daß Belüftungskanäle (41) senkrecht zur Richtung des Entleerungskanals zwischen zwei Blechen (26) an der Bodenplatte (18) befestigt sind und mit einem zentralen Belüftungskanal (10) in Verbindung stehen.

**9.** Lagersilo nach einem der Ansprüche 1 bis 8, dadurch gekennzeichnet, daß die dünnen Bleche (26) andere dünne Bleche (66) tragen, die durch Druckfedern (67) in Abstand voneinander und übereinander gehalten sind, wobei die Gesamtanordnung eine mehrstöckige Metallplatte (19) bildet.

**10.** Lagersilo nach Anspruch 4, dadurch gekennzeichnet, daß das Verbindungselement (28) ein längs in jedes der zwei benachbarten Bleche (26) eingesetztes Dichtungsprofil ist.

FIG. 1

FIG. 6

# FIG. 2

FIG. 3

EP 0 300 106 B1

FIG. 4

FIG. 5